# EUROPEAN PATENT SPECIFICATION

(11) **EP 1 602 773 B1**
(45) Date of publication and mention of the grant of the patent: **26.03.2008**
(21) Application number: 05008717.0
(22) Date of filing: 21.04.2005
(51) Int. Cl.: D06F 58/08, F16H 7/12

(54) **A device for adjusting the tension of a motion transmission belt**
Vorrichtung zur Einstellung der Spannung eines Treibriemens
Dispositif pour ajuster la tension d' une courroie de transmission.

(30) Priority: 18.05.2004 IT MI20040993
(43) Date of publication of application: 07.12.2005
(73) Proprietor: Candy S.p.A., 20052 Monza (MI) (IT)
(72) Inventor: Fumagalli, Silvano, 20052 Monza (MI) (IT)
(74) Representative: Perani, Aurelio

(56) References cited:
- DE-A1- 4 243 451
- DE-A1- 4 427 509
- DE-U1- 29 723 441

## Description

The present invention relates to a device for adjusting the tension of a motion transmission belt and particularly but not exclusively for a belt transmitting the motion from the drive shaft of an electric motor to auxiliary components driven by the motor, according to claim 1.

There are known belt-tensioning devices or tightener used to tension transmission belts capable of transmitting the motion from a drive shaft, for example of an electric motor, to a driven shaft, for example of the drum of a washing machine or dryer.

These devices comprise a lever which is hinged about one of its ends to a first axis integral with a support structure, a jockey pulley carried by this lever so as to be rotatable relative to it about a second axis distinct from the first and parallel with it and a spring placed between the lever and the motor base so as to keep the jockey pulley bearing upon the relevant belt in order to provide the belt with adequate tensioning. Such a device is known from document DE 4427509 A.

Variations in tension of the belt due to the starting up of one of the various auxiliary components and to wear are therefore taken up by consequent variations in the deformation of the spring and corresponding movements of the axis of rotation of the lever and consequently of the pulley axis.

Belt tensioners of this type have some disadvantages such as, for example, maintenance operations which are difficult and costly in terms of time and money.

This is because the lever is usually attached to the support by keying or by means of a bolted joint. In particular, according to this last method of attachment, the lever is hinged to the pin and at one of its ends has an eye or through hole into which the support pin extends. The support pin is threaded and a nut, also threaded, is screwed onto it to prevent the pin from coming out of the hole through the lever.

It is clear that to be able to carry out maintenance operations, for example replacement of the belt, it is necessary to remove or at least slacken the above-mentioned threaded nut, an operation for which suitable tools must be used, with an increase in repair times and the easily imagined consequences arising from this.

Moreover, the need to provide a bolted joint or other type of connection involves a higher cost of production and of any maintenance operations.

In view of the state of the art described above, the purpose of the present invention is to produce a device for adjusting the tension of a motion transmission belt without the disadvantages cited above.

According to the present invention, this purpose is achieved by means of a device for adjusting the tension of a motion transmission belt according to claim 1.

The present invention allows a device to be produced for adjusting the tension of a motion transmission belt, of simple construction and allowing more rapid maintenance operations.

The characteristics and advantages of the present invention will become clear from the following detailed description of a practical form of embodiment, illustrated purely by way of non-limiting example in the appended drawings, in which:
- figure 1 shows a schematic view of a device for adjusting the tension of a belt according to the present invention;
- figure 2 shows a schematic view according to a second form of embodiment of a device for adjusting the tension of a belt according to the present invention;
- figure 3 shows a schematic and partially exploded side view of some components of the device in figure 1;
- figure 4 shows a side view of a part of the belt tensioning device according to the present invention;
- figure 5 shows a front view of the part in figure 4;
- figure 6 shows a plan view of the same part as in figure 4.

With reference to the appended drawings, the number 1 indicates as a whole a device for adjusting the tension of a transmission belt 2 capable of transferring the torsional moment from a pulley 3A keyed to the drive shaft 3 of a motor 4 to at least one driven pulley 6A keyed to the driven shaft 5 of an auxiliary component 6.

In the example, the axes A-A and B-B respectively of the drive shaft 3 and of the driven shaft 5 are horizontal and parallel with each other.

The adjusting device 1 comprises first and second tensioner means, indicated respectively as 7 and 8, each of which has a jockey pulley 11 supported rotatably at the free end of a respective support lever, respectively 7A and 8A, capable of being attached removably to a support structure 9.

The jockey pulleys 11 of the tensioner means 7, 8 act on the in side 2A and out side 2B of the transmission belt 2 of one of the two pulleys 3A, 6A, preferably the drive pulley 3A as in the example illustrated.

The support levers 7A and 8A are attached to the support structure 9 so as to be hinged about an axis C-C at their free end opposite the free end at which the jockey pulleys 11 are supported.

Preferably, the support levers 7 and 8 are connected to the support structure 9 at their end opposite the above-mentioned free end at which the respective jockey pulley 11 is supported.

The jockey pulleys 11 are rotatable relative to the levers 7A and 8A about respective axes D-D and E-E parallel to the hinging axis C-C and also to the axes A-A and B-B, respectively of the drive shaft 3 and of the driven shaft 5.

Advantageously, the two levers 7A and 8A are arranged so as to be opposite each other and so that the drive pulley 3A is positioned between them. In view of what has been said, the jockey pulleys 11 carried at the free end of the respective support levers 7A and 8A are thus positioned at the tight span 2A and slack span 2B of the belt 2 from the drive pulley 3A.

The device 1 also comprises spring means 12 capable of acting on the tensioner means 7 and 8 to cause the latter to act with a predetermined spring loading on the spans 2A and 2B of the belt 2, so as to ensure that the belt has the desired tension.

In the example, the above-mentioned spring means are made in the form of a helical spring positioned between the levers 7A and 8A so as to move them closer to each other and thus cause the respective pulleys 11 to act on the belt 2 to impart the desired tension to it.

To this end, each support lever 7A and 8A has a slotted hole 13 capable of being engaged by one end of the helical spring 12 having the form of a hook.

The motor 4 is for example an electric motor to the shaft 3 of which is keyed the drive pulley 3A, while the actuator 6 may be for example the drum of a washing machine or a dryer with which the driven pulley 6A is associated.

Therefore, the levers 7 and 8 act respectively on the tight span 2A and slack span 2B of the belt 2 of one of the two shafts 3 or 5.

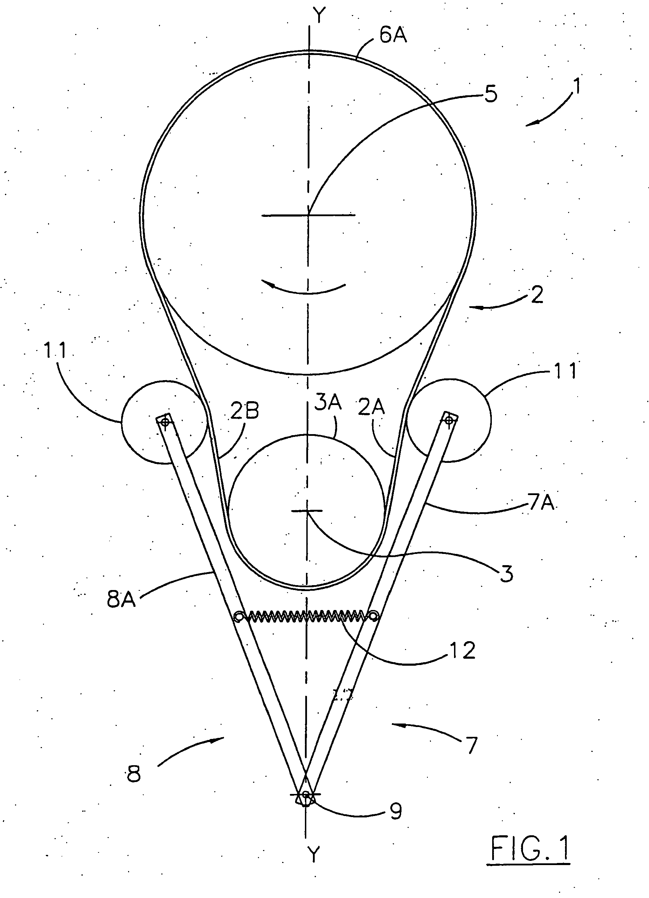

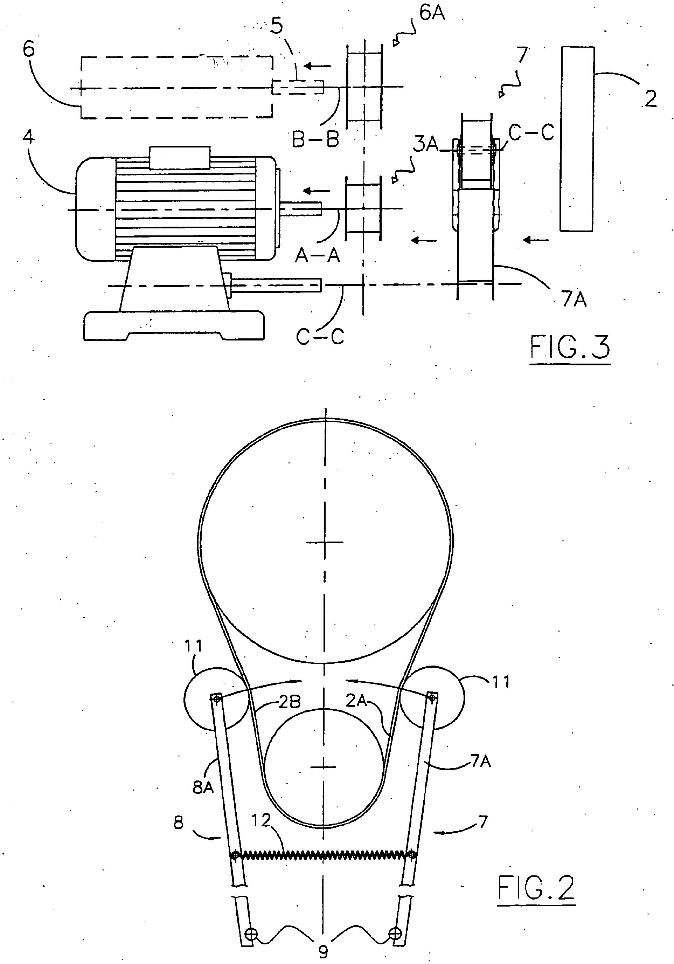

In the form of embodiment in figure 1, it will be noted how the support structure 9 is made in the form of a single pin with which the levers 7A and 8A can engage, while figure 2 shows a form of embodiment in which the support structure 9 is in the form of two parallel and separate pins.

In particular, in the second form of embodiment (figure 2), the pins 9 lie in the same horizontal plane, that is they have the same height relative to a reference threshold.

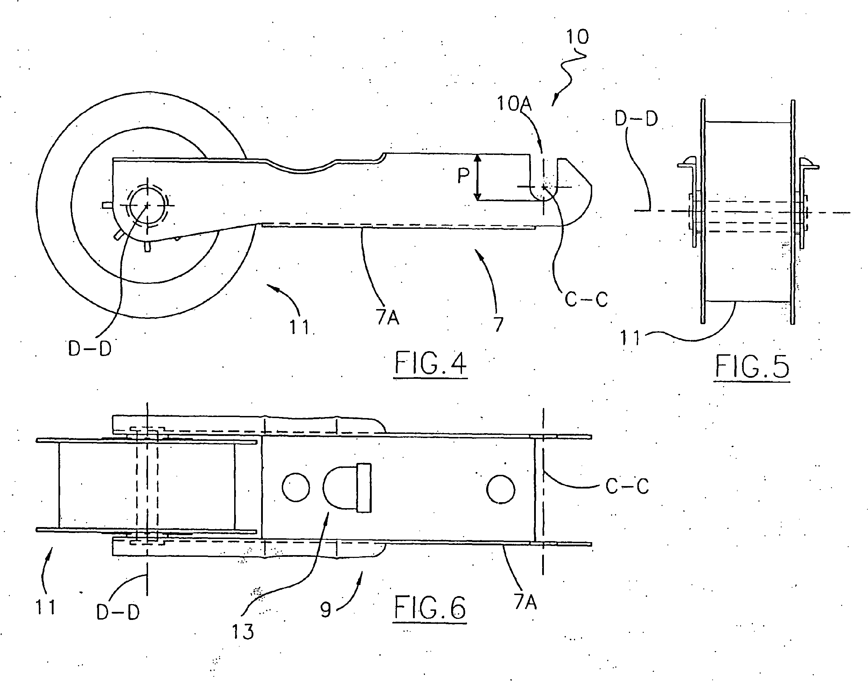

With reference to figure 5, it will be noted that the jockey pulley 11 is of such a form that it has a U-shaped annular seating in which the belt 2 is accommodated and guided laterally. In the form of embodiment considered here, the belt 2 is constituted by a single flat belt, though it is also possible to use two or more parallel belts and also toothed and/or V belts.

Advantageously, the first and second tensioner means 7, 8 are connected to the support structure 9 by hook means 10, so that they can be easily and quickly fitted to or removed from the structure.

With particular reference to figures 4 and 6, it is pointed out that in the example the hook means 10 are made in the form of a notch or recess, which extends for a predetermined distance of depth "P" in each support lever 7A, 8A starting from the outer surface.

The notches 10 therefore have an opening 10A by means of which they can be fitted to the support pin 9, so as to enclose it along the axis, insertion being in a direction substantially transverse to that of the axis of the pin 9.

Basically, the presence of the opening 10A avoids the need to slide each support lever 7A, 8A along the axis of the pin 9, to fit the lever to the support.

Bearing in mind the fact that the two support levers 7A and 8A are opposite each other and that they are hinged to the pin 9, the notches 10 are preferably made in the support levers 7A and 8A so as to have their opening 10A positioned at the surface of the respective support lever which is to face the opposite support lever.

In the preferred case of a single support pin 9 for both support levers 7A and 8A (figure 1), the pin 9 is therefore in the position of being enclosed between the two opposite support levers 7A and 8A and, more particularly, is in the position of being gripped between the bottoms of the two opposite notches 10.

In this connection it may usefully be noted that the two support levers 7A and 8A remain facing each other on opposite sides, with the drive pulley 3A placed between them by reason of the presence of the helical spring 12 which causes the two support levers 7A and 8A to be pulled towards each other.

In the example of embodiment in figure 1, the two tensioner means 7 and 8 form as a whole a V shape, at the vertex of which is located the pin 9 and at the free ends of which the jockey pulleys 11 are supported rotatably. The drive pulley 3A is positioned between the two arms of the V thus formed .

It is important to point out that in order to avoid interference between the spring means 12 and the drive pulley 3A, it is necessary for the support levers to be of adequate length, as in the examples in the drawings.

According to the preferred form of embodiment illustrated in figures 4 to 6, each support lever 7A, 8A is formed by a U-shaped channel section. The opposite flanges of the U act as support elements for the pin 9 capable of supporting the respective jockey pulley 11 in rotation at the free end of the support levers 7A, 8A. Furthermore, the notches 10 are made in the opposite flanges of the U section.

In the operation of the device 1 according to the invention, the spring means 12 act, as explained previously, in that they cause the jockey pulley 11 to act on the respective span of belt upon which they bear, so as to impart the desired tension to the belt. It is clear that by using spring means with different elastic constants it is possible to impart different tensions to the belt, that is to say to tension the belt to a greater or lesser degree.

From the spatial arrangement of the levers 7 and 8, as can be seen from the forms of embodiment illustrated in figures 1 and 2, it is clear that the two opposite support levers 7A and 8A are arranged symmetrically relative to a plane Y-Y passing through the pin 9 and through the drive shaft 3.

It should be noted that in a preferred form of embodiment, the first and second tensioner means 7, 8 are produced in one piece shaped in the form of a V by the operation of cutting and bending from a sheet of metal material.

Advantageously, the rotating fit which is produced between the support levers 7A and 8A and the respective support pin 9, allows the device 1 according to the invention to adapt automatically to any deformation in length which may arise in the belt 2 with prolonged use, taking up any slack and maintaining the desired tension in the belt.

From what has been described so far, the advantages achieved by the embodiment of the present invention are clearly shown.

In particular, a tensioning device is produced which has the tensioning pulleys arranged symmetrically relative to a plane passing through the shaft of the drive pulley, so that the device is capable of producing the same optimum performance independently of the direction of rotation of the drive pulley and accordingly of the drive belt.

Any maintenance operations which may become necessary are greatly speeded up since the device 1 according to the invention can easily be withdrawn from the pin 9 simply by removing the spring means. When this is done the support levers 7A and 8A can be moved apart, so as to disengage the respective notch 10 from the support pin 9.

Similarly, the operation of fitting will also be made very much easier, since once the notch 10 in each support lever 7A and 8A is fitted to the support pin 9 (figure 1), or to the respective support pins 9 (figure 2) it will only be necessary to connect each support lever to the other by the spring means and the device 1 according to the invention is ready to perform its action of adjusting the tension of the belt 2.

It is useful to note that the arrangement of the parts of the device 1 according to the invention is such that it is made to bear upon the two spans of the belt from the outside, that is without the need for the belt to run inside its enclosed parts. This allows the device 1 according to the invention to be removed without the need to remove the belt 2 and without the need to dismantle parts of the device which are not the spring means.

Clearly, a person skilled in the art, for the purpose of meeting incidental and specific requirements, will be able to make numerous changes and produce numerous variants to the configurations described above, without thereby departing from the scope of the invention as defined by the following claims.

## Claims

1. A device for adjusting the tension of a tensioned motion transmission belt (2) between at least two pulleys (3A, 6A), comprising first and second tensioner means (7, 8), each of which comprises a jockey pulley (11) supported rotatably by a respective lever (7A, 8A), said first and second tensioner means (7, 8) being capable of being supported by a support structure (9) and being capable of acting respectively on the tight span (2A) and slack span (2B) of the belt (2) from one of the two pulleys (3A, 6A), said device comprising spring means (12) capable of acting on said levers (7A, 8A) to impart to the respective span (2A, 2B) of the belt (2) a predetermined spring loading so as to ensure a desired tension for said belt (2), **characterized in that** said first and second tensioner means (7, 8) are equipped with hook means (10) capable of being hooked onto said support structure (9).

2. A device according to claim 1, **characterized in that** said hook means (10) comprise a notch capable of engaging with a support pin (9).

3. A device according to claim 2, and **characterized in that** each of said levers comprises a respective notch capable of engaging with a support pin (9).

4. A device according to claims 2 to 3, **characterized in that** said notch (10) extends for a predetermined distance of depth (P) from an opening (10A) situated at the outer surface of each of said support levers (7A, 8A).

5. A device according to claim 3, **characterized in that** each lever (7A,8A) is capable of being fitted to a respective support pin (9) with its own notch (10), said pins (9) lying in the same horizontal plane.

6. A device according to claim 1, **characterized in that** the tensioner means (7, 8) as a whole form a V hooked to said support structure (9) at its vertex and at the free ends of which said jockey pulleys (11) are supported rotatably.

7. A device according to claim 6, **characterized in that** at least one of said two pulleys (3A, 6A) lies between said tensioner means (7, 8).

8. A device according to the claims from any one of the preceding claims, **characterized in that** said support levers (7A, 8A) are formed by a U-shaped channel section.

9. A device according to claims 2 and 8, **characterized in that** said notch (10) is made in the opposite flanges of the U of each lever.

10. A device according to claim 8, **characterized in that** each section comprises at least one slot (13) made in a central position.

11. A device according to claim 1, **characterized in that** said spring means (12) are a helical spring.

12. A device according to claims 10 and 11, **characterized in that** said helical spring engages at its ends with said slots (13) in said sections.

13. A device according to claim 1, **characterized in that** said tensioner means (7, 8) are produced in one piece by the operation of cutting and bending from a sheet of metal material.

## Patentansprüche

1. Vorrichtung zum Einstellen der Spannung eines gespannten Antriebriemens (2) zwischen mindestens zwei Rollen (3A, 6A), ein erstes und ein zweites Spannmittel (7, 8) umfassend, wobei jedes eine Spannrolle (11) enthält, von denen jede mit einem geeigneten Hebel (7A, 8A) drehbar halten wird, wobei das erste und zweite Spannmittel (7, 8) durch eine Tragkonstruktion (9) gehalten werden können und auf die straffe Spannung (2A) oder die lose Spannung (2B) des Riemens (2) an einer der beiden Rollen (3A, 6A.) einwirken können, wobei die Vorrichtung ein Federmittel (12) enthält, das auf die Hebel (7A, 8A) einwirken kann, um eine bestimmte Federkraft auf die entsprechende Spannung (2A, 2B) des Riemens (2) zu übertragen und die gewünschte Spannung des Riemens (2) sicherzustellen, **dadurch gekennzeichnet, dass** das erste und zweite Spannmittel (7, 8) mit einem Haken (10) ausgestattet sind, der auf der Tragkonstruktion (9) eingehakt wird.

2. Vorrichtung gemäß Anspruch 1, **dadurch gekennzeichnet, dass** der Haken (10) eine Aussparung umfasst, in die ein Haltebolzen (9) eingreifen kann.

3. Vorrichtung gemäß Anspruch 2, **dadurch gekennzeichnet, dass** jeder Hebel eine geeignete Aussparung umfasst, in die ein Haltebolzen (9) eingreifen kann.

4. Vorrichtung gemäß Anspruch 2 oder 3, **dadurch gekennzeichnet, dass** die Aussparung (10) sich in einer bestimmten Tiefe (P) von einer Öffnung (10A) erstreckt, die an der Außenseite eines jedes Tragehebels (7A, 8A) angeordnet ist.

5. Vorrichtung gemäß Anspruch 3, **dadurch gekennzeichnet, dass** jeder Hebel (7A, 8A) durch seine Aussparung (10) an einem entsprechenden Haltebolzen (9) befestigt werden kann, wobei die Bolzen (9) auf derselben horizontalen Ebene liegen.

6. Vorrichtung gemäß Anspruch 1, **dadurch gekennzeichnet, dass** das Spannmittel (7, 8), das im Ganzen eine V-Form bildet, in der Tragkonstruktion (9) am Scheitelpunkt eingehakt ist, und dass an deren freien Enden die Spannrollen (11) drehbar gehalten werden.

7. Vorrichtung gemäß Anspruch 6, **dadurch gekennzeichnet, dass** zumindest eine der beiden Rollen (3A, 6A) zwischen den Spannmitteln (7, 8) liegt.

8. Vorrichtung gemäß den Ansprüchen aus einem der obigen Ansprüche, **dadurch gekennzeichnet, dass** die Tragehebel (7A, 8A) durch ein U-Profil gebildet werden.

9. Vorrichtung gemäß den Ansprüchen 2 und 8, **dadurch gekennzeichnet, dass** die Aussparung (10) in den abgewandten Flanschen des U-Profils eines jeden Hebels gebildet ist.

10. Vorrichtung gemäß Anspruch 8, **dadurch gekennzeichnet, dass** jedes Profil mindestens einen Schlitz (13) an einer mittigen Position aufweist.

11. Vorrichtung gemäß Anspruch 1, **dadurch gekennzeichnet, dass** das Federmittel (12) eine Schraubenfeder ist.

12. Vorrichtung gemäß einem der Ansprüche 10 und 11, **dadurch gekennzeichnet, dass** die Schraubenfeder mit ihren Enden in die Schlitze (13) der Profile eingreift.

13. Vorrichtung gemäß Anspruch 1, **dadurch gekennzeichnet, dass** die Spannmittel (7, 8) aus nur einem Stück gefertigt werden, indem sie aus einem Blech herausgeschnitten und gebogen werden.

## Revendications

1. Dispositif d'ajustage de la tension d'une courroie de transmission de mouvement tendue (2) entre au moins deux poulies (3A, 6A), comprenant un premier et deuxième tendeur (7,8), dont chacun comprend un galet tendeur (11) supporté de manière rotative par un levier respectif (7A, 8A), lesdits premier et deuxième tendeurs (7, 8) pouvant être supportés par une structure support (9) et pouvant agir respectivement sur le brin tendu (2A) et le brin mou (2B) de la courroie (2) depuis une des deux poulies (3A, 6A), ledit dispositif comprenant des moyens de ressort (12) capables d'agir sur lesdits leviers (7A, 8A) pour communiquer au brin respectif (2A, 2B) de la courroie (2) une charge de ressort prédéterminée de sorte à garantir une tension désirée pour ladite courroie (2), **caractérisé en ce que** lesdits premier et deuxième tendeurs (7,8) sont munis de crochets (10) pouvant être accrochés sur ladite structure support (9).

2. Dispositif selon la revendication 1, **caractérisé en ce que** lesdits crochets (10) comprennent une encoche pouvant être en prise avec un axe de support (9).

3. Dispositif selon la revendication 2, et **caractérisé en ce que** chacun desdits leviers comprend une encoche respective pouvant être en prise avec un axe de support (9).

4. Dispositif selon l'une quelconque des revendications 2 à 3, **caractérisé en ce que** ladite encoche (10) s'étend sur une profondeur (P) prédéterminée à partir d'une ouverture (10A) située à la surface extérieure de chacun desdits leviers de support (7A, 8A).

5. Dispositif selon la revendication 3, **caractérisé en ce que** chaque levier (7A, 8A) peut être ajusté à un axe de support (9) respectif doté de sa propre encoche (10), lesdits axes (9) se trouvant dans le même plan horizontal.

6. Dispositif selon la revendication 1, **caractérisé en ce que** les tendeurs (7, 8) forment dans leur ensemble un V accroché à ladite structure support (9) à son sommet et aux extrémités libres duquel lesdits galets tendeurs (11) sont supportés de manière rotative.

7. Dispositif selon la revendication 6, **caractérisé en ce qu'**au moins une desdites deux poulies (3A, 6A) se situe entre lesdits tendeurs (7, 8)

8. Dispositif selon l'une quelconque des revendications précédentes, **caractérisé en ce que** lesdits leviers de support (7A, 8A) sont formés par une section en U.

9. Dispositif selon les revendications 2 et 8, **caractérisé en ce que** ladite encoche (10) est réalisée dans les brides opposées du U de chaque levier.

10. Dispositif selon la revendication 8, **caractérisé en ce que** chaque section comprend au moins une fente (13) réalisée dans une position centrale.

11. Dispositif selon la revendication 1, **caractérisé en ce que** lesdits moyens de ressort (12) sont un ressort hélicoïdal.

12. Dispositif selon les revendications 10 et 11, **caractérisé en ce que** ledit ressort hélicoïdal est en prise à ses extrémités avec lesdites fentes (13) dans lesdites sections.

13. Dispositif selon la revendication 1, **caractérisé en ce que** lesdits tendeurs (7, 8) sont produits d'un seul tenant par l'opération de découpage et de pliage à partir d'une tôle métallique.
